# FASCICULE DE BREVET EUROPEEN

(11) **EP 0 490 316 B1**
(45) Date de publication et mention de la délivrance du brevet: **02.04.1997**
(21) Numéro de dépôt: 91121081.3
(22) Date de dépôt: 09.12.1991
(51) Int. Cl.: H01M 2/26

(54) **Procédé de liaison d'une connexion métallique sur une électrode à support de type mousse pour générateur électrochimique et électrode obtenue par ce procédé**
Verfahren zum Verbinden eines metallischen Ableiters an eine ein Schaumgerüst als Trägerteil enthaltende Elektrode für einen elektrochemischen Generator und bei diesem Verfahren erhaltene Elektrode
Method for joining a metallic current collector to an electrode comprising a spongeous supporting structure for electrochemical generator and electrode obtained thereby

(30) Priorité: 13.12.1990 FR 9015607
(43) Date de publication de la demande: 17.06.1992
(73) Titulaire: SAFT (inscrite au Registre du Commerce sous le numéro 343 588 737), F-93230 Romainville (FR)
(72) Inventeur: Guerinault, Jean-Marc, F-33850 Leognan (FR); Brunarie, Joel, F-33200 Bordeaux (FR)
(74) Mandataire: Weinmiller, Jürgen

(56) Documents cités:
- GB-A- 1 302 550
- GB-A- 2 200 068
- US-A- 3 055 963
- PATENT ABSTRACTS OF JAPAN vol. 13, no. 288 (E-781)(3636) 30 Juin 1989 & JP-A-1 072 460 ( SANYO ELECTRIC CO LTD ) 17 Mars 1989
- PATENT ABSTRACTS OF JAPAN vol. 6, no. 103 (E-112)(981) 12 Juin 1982 & JP-A-57 034 668 ( MATSUSHITA DENKI SANGYO K .K. ) 25 Février 1982
- PATENT ABSTRACTS OF JAPAN vol. 4, no. 44 (E-5)(526) 5 Avril 1980 & JP-A-55 014 685 ( MATSUSHITA DENKI SANGYO K.K. ) 1 Février 1980

## Description

La présente invention concerne un procédé de liaison d'une connexion métallique sur une électrode à support de type mousse pour générateur électrochimique et une électrode obtenue par ce procédé. Elle se rapporte notamment aux générateurs électrochimiques à électrolyte alcalin dont au moins une électrode comporte un support poreux métallique chargé de matière active. Ce support poreux présente une structure matricielle comparable à une éponge dont les cellules sont connectées les unes aux autres dans un réseau tridimensionnel : il est désigné par le terme "mousse". Avant chargement par la matière active, la porosité de la mousse est supérieure à 95%. Après chargement, l'électrode est comprimée de façon à ce que son épaisseur soit ajustée, ce qui facilite son assemblage, et assure le bon fonctionnement du générateur.

Les générateurs concernés peuvent comporter des électrodes planes, mais le plus souvent ces électrodes sont enroulées en spirales.

La liaison d'une telle électrode à une borne du générateur implique la mise en oeuvre d'une connexion métallique rapportée.

Cette connexion pose un problème car il n'est pas possible de la souder sur la mousse lorsqu'elle est chargée de matière active.

Si on envisage d'effectuer la soudure sur la mousse non chargée, la préparation de la surface à souder nécessite une opération supplémentaire et a l'inconvénient de réduire la surface active de l'électrode. En outre une telle méthode présente l'inconvénient de la fiabilité moyenne de la soudure des composants de faible épaisseur.

Il ne paraît pas possible non plus d'agrafer une connexion en mousse sur le support en mousse. Par contre, il est possible d'agrafer sur un tel support une connexion formée d'un feuillard métallique ; bien entendu ce procédé a l'inconvénient de laisser apparaître une surépaisseur sur l'électrode, de masquer une partie de sa surface électrochimiquement active et de la rigidifier localement, ce qui est gênant en cas de spiralage.

On peut à la rigueur envisager de découper la mousse éventuellement chargée de matière active de manière à faire apparaître une languette de connexion. Mais il s'agit d'une opération coûteuse car elle entraîne une perte de mousse et une perte de matière active.

La présente invention a pour but de mettre en oeuvre un procédé de liaison moins coûteux que les procédés antérieurs et permettant d'aboutir à une solidité satisfaisante de la connexion.

La présente invention a pour objet un procédé de liaison d'une connexion métallique sur une électrode pour générateur électrochimique à support de type mousse présentant un grammage compris entre 2 et 8 grammes par dm², qui a été chargé de matière active puis comprimé, caractérisé par le fait que :
- l'on réalise au moins une perforation dans ladite électrode,
- l'on comprime sur ladite perforation et la zone avoisinante une languette métallique qui pénètre superficiellement dans une première face de l'électrode,
- on soude ladite connexion sur ladite languette métallique à travers ladite perforation.

Dans certains cas, il peut être avantageux de disposer ladite connexion sur ladite languette.

Ladite perforation peut présenter une surface allant de 3 à 15mm².

De préférence ladite languette est en feuillard de nickel ou d'acier nickelé finement perforé. Il présente un nombre de trous compris entre 200 et 600 par cm² et une hauteur de perforation comprise entre une demie et quatre fois son épaisseur.

La languette peut être également en feuillard déployé ou en mousse métallique.

Ladite connexion est avantageusement en nickel ou acier nickelé et peut comporter au moins un bossage qui vient se loger dans ladite perforation pour faciliter la soudure avec ladite languette.

Il est préférable pour la solidité de l'ensemble de prévoir deux perforations dans ladite électrode. Par ailleurs, pour une électrode destinée à être spiralée, la connexion sera plutôt placée sur la face interne ou concave de cette électrode.

Le procédé selon l'invention et l'électrode qui en résultent présentent en particulier les avantages suivants :
- simplicité de la forme géométrique de la languette et de la connexion,
- simplicité de mise en oeuvre,
- absence d'opérations préliminaires de préparation de la partie active de l'électrode,
- moins grande sollicitation mécanique du support chargé de matière active, permettant l'utilisation de plus faibles grammages pour ce support, par exemple compris entre 3 et 5g/dm².
- solidité satisfaisante de la connexion.

D'autres caractéristiques et avantages de la présente invention apparaîtront au cours de la description suivante de modes de réalisation donnés à titre illustratif mais nullement limitatif. Dans le dessin annexé :
- La figure 1 est une vue très schématique d'un support d'électrode selon l'invention.
- La figure 2 est une vue très schématique d'une languette mise en oeuvre dans le procédé selon l'invention.
- La figure 3 est une vue schématique en coupe selon la ligne III-III de la figure 2.
- Les figures 4A et 4B montrent en coupe partielle très schématique la languette de la figure 2 respectivement avant et après compression dans le support de l'électrode.
- Les figures 5A et 5B sont respectivement des vues de face et en coupe d'une connexion mise en oeuvre dans le procédé selon l'invention.
- La figure 6A montre en coupe partielle très schématique une électrode selon l'invention avant la réalisation de la liaison avec sa connexion.
- La figure 6B est analogue à la figure 6A, mais illustre l'électrode après la soudure de sa connexion.

### EXEMPLE I

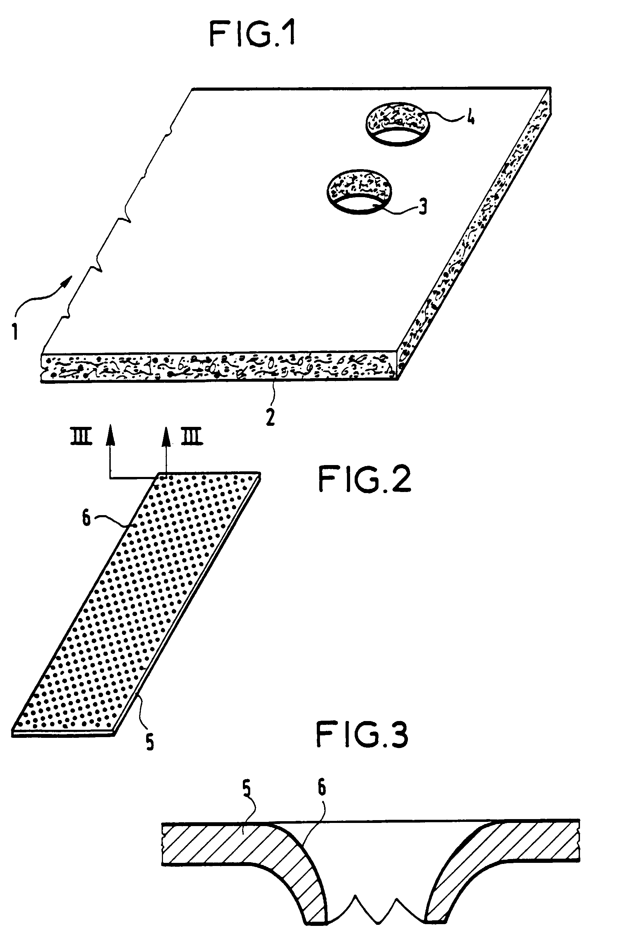

On voit dans la figure 1 une électrode 1 dont le support 2 est en mousse de nickel de grammage 6,5g/dm² et présente les dimensions suivantes : épaisseur 1,6mm ; longueur 170mm ; largeur 30mm. Ce support est chargé de manière uniforme avec 17g/dm² de matière active à base d'hydroxyde de nickel.

Le support 2 est comprimé après l'étape de chargement pour que son épaisseur soit ajustée.

On réalise ensuite à travers le support 2 deux perforations 3 et 4 de 3mm de diamètre, situées dans la zone où l'on souhaite rapporter une connexion.

On prépare par ailleurs une languette 5 visible dans la figure 2, en feuillard finement perforé en acier nickelé d'une épaisseur de base e de 0,09mm. L'épaisseur totale hs du feuillard compte tenu de ses trous 6 est de 0,3mm ; il comporte 400 trous par cm². La longueur de la languette 5 est de 10mm et sa largeur est de 6mm.

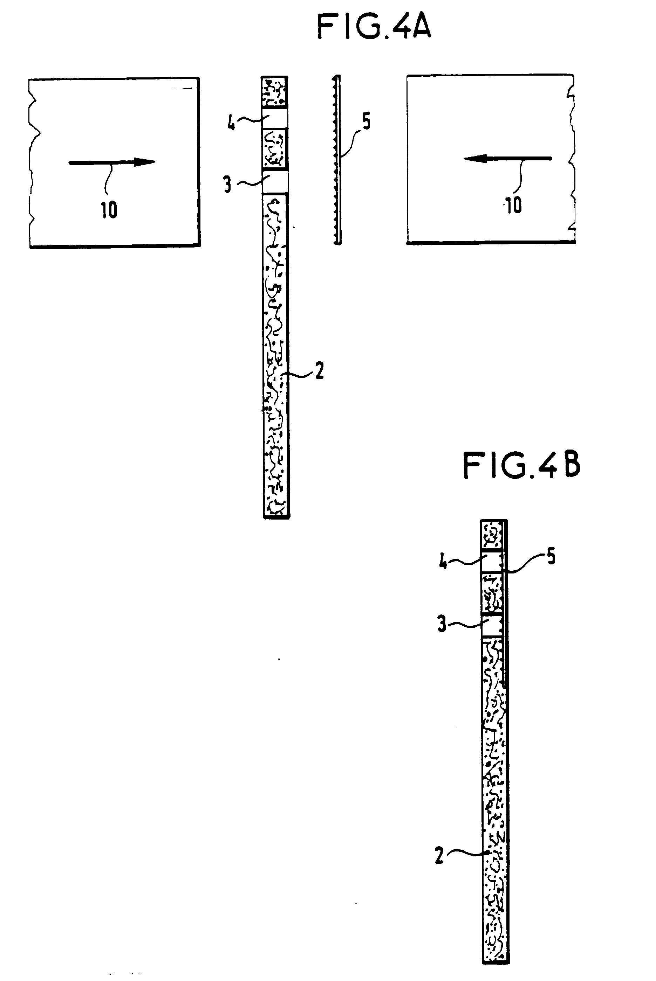

Comme cela apparaît dans les figures 4A et 4B, l'ensemble support 2 - languette 5 est comprimé (flèches 10) entre les plateaux d'une presse de façon à atteindre 0,5mm d'épaisseur dans la zone considérée.

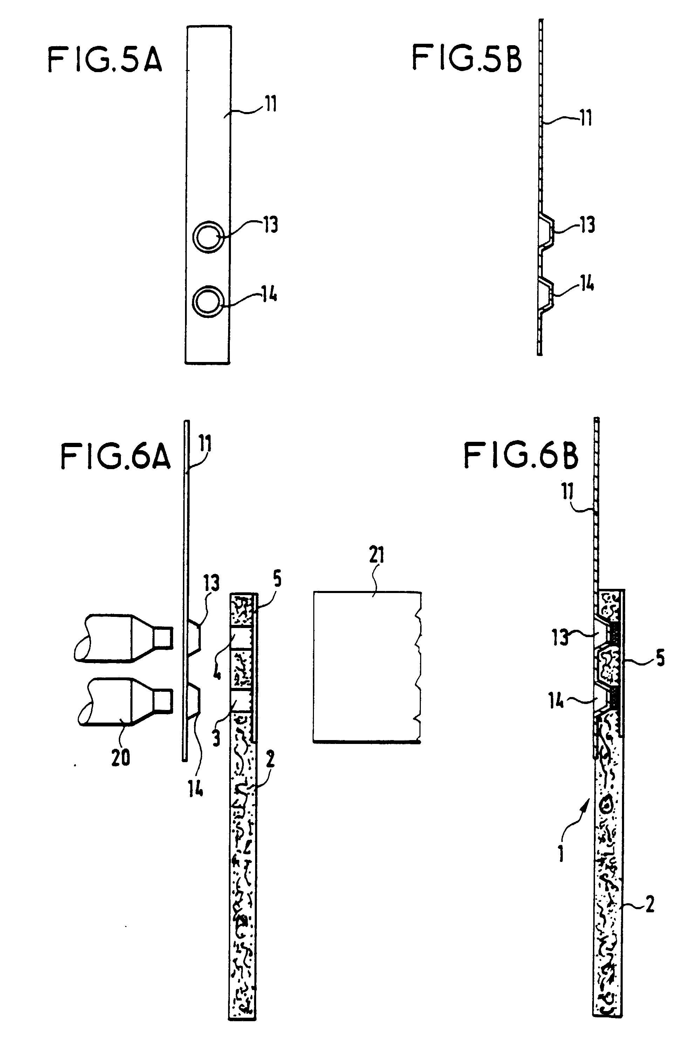

On prépare également une connexion 11 visible dans les figures 5A et 5B, en acier nickelé d'épaisseur 0,2mm, de longueur 24mm et de largeur 5mm. Elle présente deux bossages 13 et 14 de 2mm de diamètre et de 0,25mm de hauteur.

Ensuite, comme cela apparaît dans les figures 6A et 6B, on vient mettre en place la connexion 11 vis-à-vis de la languette 5 pour que les bossages 13 et 14 viennent se centrer sensiblement dans les perforations 3 et 4. On réalise alors une soudure électrique à l'aide d'un dispositif classique 20, 21.

La figure 6B montre l'électrode 1 avec sa connexion 11.

### EXEMPLE II

On met en oeuvre un procédé analogue à celui qui vient d'être décrit avec les caractéristiques modifiées suivantes.

Le support 2 est en mousse de nickel présentant un grammage de 3,5g/dm² ; son épaisseur est de 1,6mm, sa longueur 130mm et sa largeur 30mm. La matière active dont il est chargé est à base d'hydrure d'alliage métallique.

Le support 2 est comprimé avec la languette 5 pour que l'ensemble présente une épaisseur de 0,4mm dans la zone prévue pour la connexion.

Après soudage de sa connexion 11, l'électrode obtenue peut être spiralée en face d'une électrode positive à base d'hydroxyde de nickel et raccordée au boîtier de l'accumulateur par une soudure électrique classique ou par simple contact.

### EXEMPLE III

On met en oeuvre un procédé analogue à celui qui correspond à l'exemple I, mais cette fois la languette est en mousse de nickel de grammage 6g/dm² et son épaisseur est de 1,6mm.

Dans ce cas, et selon un mode de réalisation non illustré, la connexion peut être située sur la même face de l'électrode que la languette.

Bien entendu l'invention n'est pas limitée aux modes de réalisation précités. On pourra, sans sortir du cadre de l'invention, remplacer tout moyen par un moyen équivalent.

## Revendications

1. Procédé de liaison d'une connexion métallique sur une électrode pour générateur électrochimique à support de type mousse présentant un grammage compris entre 2 et 8 grammes par dm², qui a été chargé de matière active puis comprimé, caractérisé par le fait que :
- l'on réalise au moins une perforation dans ladite électrode,
- l'on comprime sur ladite perforation et la zone avoisinante une languette métallique qui pénètre superficiellement dans une première face de l'électrode,
- on soude ladite connexion sur ladite languette métallique à travers ladite perforation de l'électrode.

2. Procédé de liaison selon la revendication 1, caractérisé par le fait que ladite languette est en feuillard de nickel ou d'acier nickelé finement perforé.

3. Procédé de liaison selon la revendication 2, caractérisé par le fait que ledit feuillard présente un nombre de trous compris entre 200 et 600 par cm² et une hauteur de perforation comprise entre une demie et quatre fois son épaisseur.

4. Procédé de liaison selon la revendication 1, caractérisé par le fait que ladite languette est en feuillard déployé.

5. Procédé de liaison selon la revendication 1, caractérisé par le fait que ladite languette est en mousse métallique.

6. Procédé de liaison selon l'une des revendications 1 et 2, caractérisé par le fait que ladite connexion est en nickel ou acier nickelé.

7. Procédé de liaison selon l'une des revendications précédentes, caractérisé par le fait que ladite connexion comporte au moins un bossage qui vient se loger dans ladite perforation pour faciliter la soudure avec ladite languette.

8. Procédé de liaison selon l'une des revendications précédentes, caractérisé par le fait que ladite perforation présente une surface comprise entre 3 et 15mm².

9. Electrode obtenue par le procédé selon l'une des revendications précédentes.

## Patentansprüche

1. Verfahren zum Abringen eines metallischen Anschlusses an einer Elektrode für einen elektrochemischen Generator, die einen schaumförmigen Träger mit einem Grammgewicht zwischen 2 und 8 g/dm² enthält, der mit aktivem Material versehen und dann komprimiert wurde,
dadurch gekennzeichnet, daß
- in der Elektrode mindestens ein Loch erzeugt wird,
- auf das Loch und den dieses umgebenden Bereich eine Metallzunge aufgepreßt wird, die oberflächlich in eine erste Seite der Elektrode eindringt,
- der Anschluß an die Metallzunge durch das Loch hindurch angeschweißt wird.

2. Verfahren nach Anspruch 1, dadurch gekennzeichnet, daß die Zunge aus einer fein gelochten Nickel- oder vernickelten Stahlfolie besteht.

3. Verfahren nach Anspruch 2, dadurch gekennzeichnet, daß die Folie zwischen 200 und 600 Löcher je cm² und eine Dicke unter Berücksichtigung der Lochränder zwischen einhalb und viermal der Foliendicke aufweist.

4. Verfahren nach Anspruch 1, dadurch gekennzeichnet, daß die Zunge aus einer gestreckten Folie besteht.

5. Verfahren nach Anspruch 1, dadurch gekennzeichnet, daß die Zunge aus Metallschaum besteht.

6. Verfahren nach einem der Ansprüche 1 und 2, dadurch gekennzeichnet, daß der Anschluß aus Nickel oder vernickeltem Stahl ist.

7. Verfahren nach einem der vorhergehenden Ansprüche, dadurch gekennzeichnet, daß der Anschluß mindestens einen Vorsprung aufweist, der sich in die Perforation einfügt, um die Verschweißung mit der Zunge zu erleichtern.

8. Verfahren nach einem der vorhergehenden Ansprüche, dadurch gekennzeichnet, daß das Loch eine Fläche zwischen 3 und 15 mm² aufweist.

9. Elektrode, die durch das Verfahren gemäß einem der vorhergehenden Ansprüchen erhalten wird.

## Claims

1. A bonding method for bonding a metal connection to an electrode for an electrochemical cell, the electrode having a foam type substrate with mass per unit area lying in the range 2 g/dm² to 8 g/dm², which substrate has been filled with active material and has then been compressed, the method being characterized by the facts that:
at least one perforation is formed through said electrode;
a metal tongue is compressed against said perforation and the surrounding zone, which tongue penetrates superficially into a first face of the electrode; and
said connection is welded to said metal tongue through said perforation in the electrode.

2. A bonding method according to claim 1, characterized by the fact that said tongue is made of finely perforated nickel or nickel-plated steel foil.

3. A bonding method according to claim 2, characterized by the fact that said foil has 200 to 600 holes per cm², and its perforation depth lies in the range one-half to four times its thickness.

4. A bonding method according to claim 1, characterized by the fact that said tongue is reeled out foil.

5. A bonding method according to claim 1, characterized by the fact that said tongue is made of metal foam.

6. A bonding method according to claim 1 or 2, characterized by the fact that said connection is made of nickel or nickel-plated steel.

7. A bonding method according to any preceding claim, characterized by the fact that said connection includes at least one boss which is received in said perforation to facilitate welding to said tongue.

8. A bonding method according to any preceding claim, characterized by the fact that the area of said perforation lies in the range 3 mm² to 15 mm².

9. An electrode obtained by the method according to any preceding claim.
